Europäisches Patentamt

European Patent Office

Office européen des brevets

(19)

(11) Publication number: **0 167 246**
**A1**

# (12) EUROPEAN PATENT APPLICATION

(21) Application number: **85303313.2**

(22) Date of filing: **10.05.85**

(51) Int. Cl.⁴: **B 32 B 25/08**

(30) Priority: **13.06.84 JP 119926/84**

(43) Date of publication of application:
**08.01.86 Bulletin 86/2**

(84) Designated Contracting States:
**DE GB**

(71) Applicant: **Bridgestone Corporation**
**10-1, Kyobashi 1-Chome Chuo-Ku**
**Tokyo(JP)**

(72) Inventor: **Suzui, Akira**
**582-27, Hidakamachidai**
**Irumagun Saitama Prefecture(JP)**

(72) Inventor: **Sato, Kenjiro**
**686-20, Nishiterakatamachi**
**Hachioji City Tokyo(JP)**

(74) Representative: **Quest, Barry et al,**
**SYDNEY E. M'CAW & Co. 41-51 Royal Exchange Cross**
**Street**
**Manchester M2 7BD(GB)**

(54) Waterproof sheet coated with water absorptive tacky material.

(57) A composite waterproof sheet (1) to be attached to a concrete surface (3) the sheet being laminated with a water absorptive tacky material (2) which is prepared by blending a tacky material and a water absorptive material so that the composition may absorb water of at least 15 weight % relative to the empty weight of said material and has a modulus of dynamic shearing stored elasticity of $3 \times 10^3 - 5 \times 10^7$ dyn/cm².

Fig.1

# WATERPROOF SHEET COATED WITH
# WATER ABSORPTIVE TACKY MATERIAL

## TECHNICAL FIELD OF THE INVENTION

The invention relates to a waterproof sheet to be fixed over the concrete structure surface, such as flat roof of the concrete building or execution of waterproofing works with use of such sheet.

## BACKGROUND OF THE INVENTION AND PRIOR ARTS

Concrete has widely been used for various structures in view of its durability, fire-resistance, relatively low costs of construction and maintenance. It has various disadvantages on the other hand, however, one of which is water absorptivity and water permeability. Thus, it is necessary sometimes to cover the concrete structure surface with waterproof material in order to prevent water from penetrating thereinto. For instance the flat roof or ceiling of the concrete building must be fully covered with such material, and otherwise it is inevitable to be annoyed by undesirable water leakage.

Recently waterproof sheet thermoplastically formed from polymer of high durability, wear resistance and weatherability has been used for that purpose. The waterproof sheet is fixed over the surface, for instance, of the concrete roof, and when deteriorated it is replaced with a fresh sheet which makes the waterproof work very simple and inexpensive. In order to fix the sheet various adhesive or tacky

- 2 -

material may be applied on the concrete surface which should naturally been cleaned in advance by sweeping loose dirts away and scraping adhered foreigners.

Even if such careful consideration is taken, however, the extended sheet is often partly swollen up. Such swollen portions larger or smaller not only mar the appearance of the roof but also jeopardize smooth walking thereof by persons and accelerrate deterioration of the sheet as the time lapses.

Such phenomenon has been considered to be caused by vapor generated by sunshine heating of water involved in the concrete, which will more readily occur at portions where dirts and foreigners lie between the sheet and the concrete surface. This waterproof works, thus, must not be done just after casting concrete or rainfall, but in fact even if every careful attention is payed to the above causes it is difficult to completely avoid occurrence of said phenomenon.

It has been proposed to provide a ventilation layer for liberating vapor therethrough by laying an open cell foamed material or fibrous mat between the waterproof sheet and the concrete surface. However, this is completely unsatisfactory in that not only the execution of the waterproof works is made complex but also water is apt to be penetrated through said layer into over the concrete surface. Furthermore said layer inevitably prevents the waterproof sheet from being firmly adhered onto the concrete surface, which also adversely affects on the waterproofness.

SUMMARY OF THE INVENTION

- 3 -

It is, thus, an object of the invention to provide an inexpensive waterproof sheet capable of avoiding said defects.

It is also the object to propose a very simple execution of waterproof works for the concrete structure such as a flat roof of the concrete building.

Said objects and other advantages to be appreciated by studying the specification may be attained according to the invention by providing a waterproof sheet coated at one side thereof with a tacky material added with water absorptive material.

The waterproof sheet is preferably prepared by thermoplastically extrusion-forming of polymer. Of course natural rubber sheet, fibrous fabric impregnated with resin and the like may be used.

The water absorptive tacky material to be used for the invention may be any material so far as it can keep tackiness for a practically sufficient time under usual weather conditions, absorb water in a practically sufficient amount preferably not less than 15 weight % relative to the empty weight of the material itself, and display elasticity in the range of $3 \times 10^3 - 5 \times 10^7$ dyn/cm$^3$ of modulus of dynamic shearing stored elasticity (G') (25°C, 15 Hz).

Said water absorptive tacky material comprises tacky material and water absorptive material. As the tacky material, natural rubber, polyisoprene rubber, styrene-butadiene rubber, butyl rubber, polyisobutylene rubber, chloroprene rubber, nitrile rubber, styreneisoprene copolymer rubber, reclaimed rubber, polyacrylate, ethylene-vinyl acetate copolymer,

- 4 -

polyurethane and so on may be used. As the water absorptive material, inorganic material such as bentonite comprising silicic acid hydrate, silicic acid anhydride, calcium silicate and montmorillonite; polyurethane series such as hydrophilic urethane prepared by reacting poly(oxyethylene-oxyalkylene)polyol with an isocyanate compound such as toluenediisocyanate and 4,4'-diphenylmethane diisocyanate; cross linked polyethylene oxide series; polyvinyl alcohol series such as formalated polyvinyl alcohol; acrylic series such as cross linked sodium polyacrylate and cross linked polyacryl amide; water unsoluble high water absorptive resin having an nonionic anionic or cationic hydrophilic group may be used.

Mixture of said water absorptive material and tacky material is well kneaded, as occasion demands added with a plasticizer, a tackifier, a stabilizer and other additives are added, to prepare the water absorptive tacky material for the invention. The ratio of said two components to be combined is variously different depending on the sorts thereof. The thickness thereof is preferably 0.1 - 3.0 mm. It may be coated on or laminated with the waterproof sheet over one side thereof, or prepared in the form of a both sides tacky sheet restictively covered with a release paper so that before the waterproof sheet is extended over the concrete surface said release papers may be removed to be laid therebetween. When the waterproof sheet is covered with said material in advance, which is of course covered with a release paper. On the concrete surface a primer may be coated in advance. As occasion demands it is also possible

- 5 -

to coat an adhesive but preferably as thinly as possible.

The water absorptive material well captures moisture or water content in the concrete to keep therien so that even when the concrete surface is heated by sun beam there is caused no vapor to swell the waterproof sheet and tacky material may well exhibit its ability to firmly fix the sheet over the concrete surface. Furthermore, the waterproof absorptive tacky material layer is flexible so as to comply well with the uneven concrete surface and cracks inevitably caused and developed on the concrete surface in comparison with the waterproof sheet fixed on the concrete surface with a conventional adhesives only. The invention is further advantageous in view of that there is no need of using an organic solvent harmful to a human body and dangerous in inflammability to be used in such adhesive.

BRIEF EXPLANATION OF THE DRAWING

Fig. 1 is a schematic section of the concrete substrate on which the waterproof sheet according to the invention is attached; and

Fig. 2 is an illustration of the method for testing swell of the waterproof sheet by water vapor from the concrete substrate.

The invention shall be explained in more detail in reference to some Examples to be given hereafter.

Example 1

A tacky material of butyl rubber/polybutene (100/300) was well kneaded with white carbon comprising 95% silisic acid hydrate and bentonite as water absorptive materials to prepare the water absorptive tacky material.

Said material was formed in a sheet of 1 mm thickness according to the press method. By pregnating a sample thereof with water at the room temperature and weighing the increased weight, the maximum water absorptiveness was 30 weight % relative to the empty weight. The dynamic shearing stored elasticity (G') of said sample was determined by the mechanical spectrometer (manufactured by a firm, Rheometrics) at 25°C and by 15 Hz to show $5.5 \times 10^4$ $\text{dyn/cm}^2$.

Said 1 mm thickness water absorptive tacky material film is laminated with a waterproof sheet made of polyolefinic thermoplastic of 1 mm thickness according to the press method to prepare a waterproof sheet laminated with water absorptive tacky material layer according to the invention of the total thickness of 1 mm.

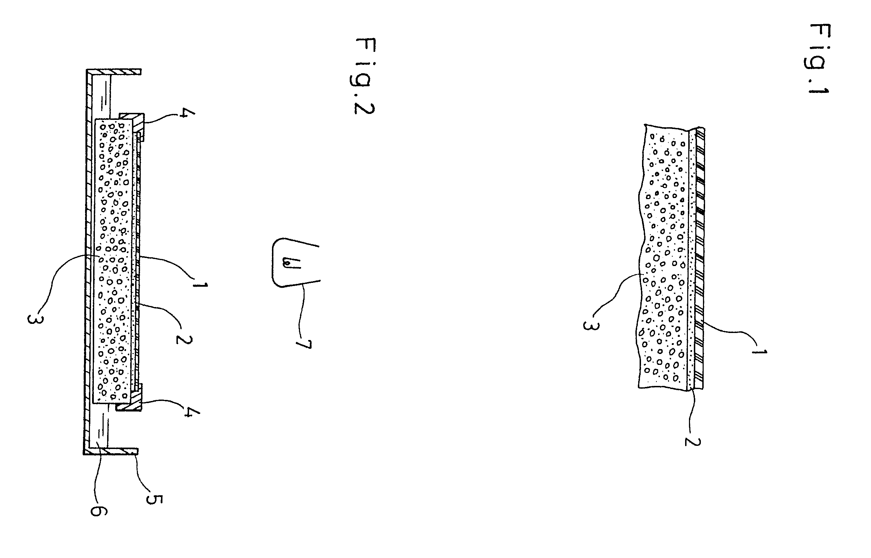

Fig. 1 illustrates the waterproof sheet (1) laminated with the water absorptive tacky material layer (2) according to the invention is attached over the concrete substrate (3).

Fig. 2 illustrates how the test of swell of the waterproof sheet by water vapor from the concrete substrate is carried out. The composite waterproof sheet was covered with a marketed adhesive (4) for concrete around the edges thereof and taken in a water tank (5) filled with water (6). An infrared lamp (7) of 375 Watt was used for heating said sheet at the

- 7 -

surface to be constantly at 70°C. Even after the lapse of 8 hours, there was observed no swell on the sheet surface.

Example 2

A tacky material of butyl rubber/polybutene (100/200) was well kneaded with white carbon comprising 95% silisic acid hydrate and bentonite as water absorptive material to prepare the water absorptive tacky material.

The maximum water absorptiveness of the sample prepared as in Example 1 was 50 weight % and dynamic shearing stored elasticity (G') thereof was $1.5 \times 10^6$ dyn/cm$^2$.

The composite waterproof sheet laminated with said water absorptive tacky material layer as in Example 1 was sujected to the similar test which showed no swell on the surface thereof even after the lapse of 8 hours.

Example 3

A tacky material of butyl rubber/polybutene (100/300) was well kneaded with pulverized resin of water-unsoluble and high water absorptive acrylic acid/vinyl alcohol copolymer (manufactured by Sumitomo Chemical Industried Co., Ltd; SUMICAGEL SP520) to prepare the water absorptive tacky material.

The maximum water absorptiveness of the sample prepared as in Example 1 was 80 weight % and dynamic shearing stored elasticity (G') thereof was $3.5 \times 10^5$ dyn/cm$^2$.

The composite waterproof sheet laminated with

- 8 -

said water absorptive tacky material layer as in Example 1 was subjected to the similar test which showed no swell on the surface thereof even after the lapse of 8 hours.

Comparison Experiment 1

A tacky material similar to that used in Example 1 was well kneaded with carbon and calcium carbonate instead of white carbon and bentonite used therein.

A sample prepared by similar treatment was subjected to the test which shows a modulus of dynamic shearing store elasticity (G') of $6.0 \times 10^4$ dyn/cm$^2$.

Similarly laminated composite waterproof sheet was subjected to the test. Already after the lapse of only 40 minutes, there was observed swells on the sheet at a center portion thereof.

Comparison Experiment 2

Polyolefinic theremoplastic waterproof sheet similar to that used in Example 1 was fixed over the concrete substrate on which concerned both surfaces were in advance coated with a synthetic rubber adhesive (manufactured by a firm Prince Chemical Industries Co., Ltd. PC Bond 625C). 25 minutes thereafter, said sample was subjected to the similar test. Only after the lapse of 2 hours, there was observed swells on the waterproof sheet at a center portion therof.

. What is claimed is;

1.    A composite waterproof sheet laminated with a water absorptive tacky material layer.

2.    The composite water proof sheet as claimed in Claim 1, in which thickness of said layer preferably ranges from 0.1 mm to 3.0 mm.

3.    The composite water proof sheet as claimed in Claim 1, said water absorptive tacky material is prepared by blending a tacky material and a water absorptive material so that the composition may absorb water of at least 15 weight % relative to the empty weight of said composition and has a modulus of dynamic shearing stored elasticity of $3 \times 10^3 - 5 \times 10^7$ dyn/cm$^2$.

4.    A concrete substrate having attached thereon a composite waterproof sheet as claimed in any one of claims 1 to 3.

Fig.1

Fig.2

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | GB-A-2 053 733 (HIRAOKA & CO., LTD.) <br> * Figure 4; claims 1-7,9,10,15,17,18,23; examples 1,2; page 3, lines 59-64; page 4, lines 2-4, 32-34 * | 1-3 | B 32 B 25/08 |
| A | | 4 | |
| Y | US-A-4 368 228 (R. GORGATI) <br> * Abstract; claims 1,11,15; examples; column 5; column 2, lines 1-6 * | 1-4 | |
| Y | FR-A-1 583 729 (W.R. GRACE & CO.) <br> * Whole document * | 1-4 | |
| A | US-A-3 937 640 (E. TAJIMA et al.) <br> * Abstract; claims; figure 1D; examples; column 3, lines 50-60; column 5, line 40 - column 6, line 45; column 6, lines 60-61 * | 1-4 | TECHNICAL FIELDS SEARCHED (Int Cl 4) <br><br> B 32 B |
| A | GB-A- 988 083 (G. GOBERT) <br> * Claims 1-4,8,12,21; example II; page 1, lines 61-83; page 2, lines 15-27, 52-55 * | 1-4 | |

--- -/-

The present search report has been drawn up for all claims

| Place of search | Date of completion of the search | Examiner |
|---|---|---|
| THE HAGUE | 10-10-1985 | DE LA MORINERIE B.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| DOCUMENTS CONSIDERED TO BE RELEVANT | | | Page 2 |
|---|---|---|---|
| Category | Citation of document with indication. where appropriate, of relevant passages | Relevant to claim | CLASSIFICATION OF THE APPLICATION (Int Cl 4) |
| A | US-A-3 561 177 (I.T. AGRO et al.)<br>* Abstract; figures 16,17; column 5, lines 37-70 * | 1-4 | |
| A | FR-A-1 579 758 (BAYER)<br><br>* Page 1, line 29 - page 2, line 24 * | | |

TECHNICAL FIELDS
SEARCHED (Int Cl 4)

The present search report has been drawn up for all claims

| Place of search<br>THE HAGUE | Date of completion of the search<br>10-10-1985 | Examiner<br>DE LA MORINERIE B.M. |
|---|---|---|